# EUROPÄISCHE PATENTSCHRIFT

(11) **EP 1 982 922 B1**
(45) Veröffentlichungstag und Bekanntmachung des Hinweises auf die Patenterteilung: **10.11.2010**
(21) Anmeldenummer: 08002987.9
(22) Anmeldetag: 19.02.2008
(51) Int. Cl.: B65D 5/74, B05C 17/005

(54) **Behälter und Verfahren zum Eröffnen eines Behälters**
Container and method for opening a container
Récipient et procédé destiné à l'ouverture d'un récipient

(30) Priorität: 16.04.2007 DE 102007018143
(43) Veröffentlichungstag der Anmeldung: 22.10.2008
(73) Patentinhaber: Kettenbach GmbH & CO. KG, 35713 Eschenburg (DE)
(72) Erfinder: Suchan, Matthias Dr., 57627 Hachenburg (DE); Bublewitz, Alexander Dr., 35745 Herborn (DE)
(74) Vertreter: KEIL & SCHAAFHAUSEN Patentanwälte

(56) Entgegenhaltungen:
- EP-A- 1 138 397
- EP-A- 1 557 363
- GB-A- 2 085 406
- JP-A- 10 273 167
- JP-A- 2006 096 421
- US-A- 3 374 927

## Beschreibung

Die Erfindung betrifft einen Behälter zur Aufnahme flüssiger und/oder pastöser Substanzen mit einem rohrförmigen Auslassstutzen, der zur Lagerung durch eine Folie oder dergleichen Membran gegenüber einer in dem Behälter aufgenommenen Substanz abgedichtet ist und der zur Aufnahme eines bereichsweise in den Auslassstutzen einsteckbaren Einlassstutzens eines Ausbringelements ausgebildet ist, und mit einer Aufstechhülse, die verschiebbar in dem Auslassstutzen aufgenommen ist. Weiter betrifft die Erfindung eine Kombination aus einem Behälter und einem Ausbringelement sowie ein Verfahren zum Eröffnen eines Behälters.

Flüssige und/oder pastöse Komponenten werden häufig in starren, kartuschenartigen Behältern oder in Schlauchbeuteln, die mit einer starren Ausbringkappe verbunden sind, angeboten. Zum Eröffnen derartiger Behälter ist es erforderlich, dass ein Anwender vor der ersten Benutzung eine Folie oder dergleichen durchtrennt, so dass die in dem Behälter aufgenommene Substanz austreten kann. Da hierzu teilweise das Bereitstellen eines geeigneten Werkzeugs erforderlich ist, wird dies als aufwendig und nachteilig empfunden.

In der DE 299 23 938 U1 wird eine Vorrichtung zum Öffnen eines eine pastöse Substanz beinhaltenden Schlauchbeutels beschrieben, wobei in einem Auslassstutzen eine mit dem Schlauchbeutel verbundenen Aufnahmekappe ein axial verschiebbares Anstechröhrchen vorgesehen ist. Dieses kann manuell aus einer Rückzugsposition, in der das Anstechröhrchen zwar nicht über eine Anlageebene des Schlauchbeutels vorsteht, aber auf der gegenüberliegenden Seite aus dem Auslassstutzen hinausragt, in eine Vorschubposition verschoben werden, in der das Anstechröhrchen über die Anlageebene übersteht und damit den Schlauchbeutel eröffnet. Um ein ungewolltes Eröffnen des Schlauchbeutels während des Transports und der Lagerung zu vermeiden, ist ein entfernbarer Abstandshalter vorgesehen, durch welchen das Anstechröhrchen in seiner Rückzugsposition gehalten werden kann. Ähnliche Vorrichtungen sind auch aus der EP 1 138 396 B1, der EP 1 138 397 B1, der EP 1 227 049 B1 und der EP 1 557 363 A1 bekannt. Bei diesen Vorrichtungen kann in einigen Anwendungsfällen das vor dem Eröffnen des Behälters erforderliche Entfernen des Abstandshalters als nachteilig empfunden werden. Zudem besteht die Gefahr einer ungewollten Eröffnung des Behälters, wenn der Abstandshalter nicht ausreichend gesichert sein sollte.

In der CH 674 717 A5 und der DE 196 18 693 A1 werden Mischer vorgeschlagen, welche als Ausbringelemente mit Behältern verbindbar sind. Dabei sind die Einlassstutzen der Mischer als Aufstechzapfen ausgebildet, die einen Schlauchbeutel oder dergleichen aufstechen können. Eine Eröffnung der Behälter ist daher nur mit einem speziell hierfür ausgebildeten Mischer möglich.

Weiter werden in der DE 91 03 038 U1, in der GB 2 255 596 A und der EP 0 653 362 A1 jeweils Schlauchbeutel beschrieben, die durch Ausbringkolben auf starre Aufstechdorne oder dergleichen geschoben werden können, welche in einer Kappe oder Kartusche vorgesehen sind. Die Schlauchbeutel lassen sich auf diese Weise automatisch durch das Vorschieben oder Vorwölben der Schlauchbeutel während des Entleerungsvorganges eröffnen. Hierbei besteht jedoch die Gefahr, dass die Schlauchbeutel bereits während der Lagerung oder des Transports ungewollt mit den Aufstechdornen in Kontakt treten, was zu einer Eröffnung der Schlauchbeutel führen könnte.

Aus der EP 1 169 242 B1 ist eine Folienverpackung bekannt, die aus einem Schlauchbeutel und einem mit diesem verbundenen Deckel besteht, der mit einer Kappe mit einem Auslassstutzen verbindbar ist. In der Kappe ist ein vorstehender Dorn zum Eröffnen des Schlauchbeutels vorgesehen. Weiter ist in dem Auslassstutzen ein Sperrelement angeordnet, welches in Richtung zu dem Schlauchbeutel über die Spitze des Doms hervorsteht, so dass ein unbeabsichtigtes Eröffnen des Schlauchbeutels verhindert wird. Zur Eröffnung des Schlauchbeutels wird zunächst das Sperrelement aus dem Auslassstutzen entfernt und anschließend der Schlauchbeutel mit dem Deckel weiter in die Kappe verschoben, so dass der Dom in den Schlauchbeutel eindringt. Zur Eröffnung eines Schlauchbeutels muss ein Anwender daher mehrere Arbeitsschritte ausführen.

Weiter ist aus der GB 2 085 406 A eine Getränkeverpackung aus einem Papier-Verbundwerkstoff bekannt, die mit einem steifen Schraubverschluss versehen ist. Vor dem ersten Öffnen der Verpackung ist eine dem Verschluss zugeordnete Öffnung durch eine Siegelfolie verschlossen. In dem Auslassstutzen des Verschlusses ist eine Hülse zum Durchstoßen der Siegelfolie vorgesehen, die von einem Benutzer zum Öffnen der Verpackung in diese eingedrückt werden muss. Der Verschiebeweg dieser Hülse relativ zu dem Auslassstutzen ist in beiden Richtungen durch jeweils einen Vorsprung begrenzt. Eine ähnliche Verpackung ist auch in der JP 2006-096421 A gezeigt.

Aufgabe der vorliegenden Erfindung ist es daher, einen Behälter sowie ein Verfahren zu seiner Eröffnung anzugeben, bei welchem ein ungewolltes Eröffnen während des Transports oder der Lagerung vermieden wird und gleichzeitig ein besonders einfaches Eröffnen des Behälters bei der ersten Benutzung ermöglicht wird.

Diese Aufgabe wird erfindungsgemäß durch die Merkmale von Anspruch 1 gelöst, ferner durch die Merkmale der Ansprüche 9 und 12.

Da die Aufstechhülse in ihrer Lagerposition vorzugsweise nicht mit der Folie in Kontakt tritt, besteht keine Gefahr, dass der Behälter während des Transports oder der Lagerung ungewollt eröffnet wird, wenn die Folie beschädigt wird. Dagegen lässt sich der Behälter leicht eröffnen, wenn ein Mischer oder dergleichen Ausbringelement auf dem Behälter aufgesetzt wird. Dieses Aufsetzen des Mischers führen die meisten Anwender intuitiv aus, so dass ohne einen zusätzlichen Arbeitsschritt mit dem Aufsetzen des Mischers oder dergleichen Ausbringelements der Behälter eröffnet wird. Dies hat zudem den Vorteil, dass der Behälter bis unmittelbar vor der ersten Benutzung verschlossen bleibt. Ein ungewolltes Austreten der in dem Behälter aufgenommenen Substanzen und/oder das Eindringen von Keimen oder Verschmutzungen in den Behälter wird auf diese Weise wirkungsvoll vermieden. Eine luftdichte Verpackung bis unmittelbar vor der ersten Benutzung ist auch bei vielen im Dentalbereich eingesetzten Produkten für die Lagerstabilität entscheidend. Für eine sichere Eröffnung wird es bevorzugt, wenn die Aufstechhülse die Folie durchdringt. Es kann jedoch auch ausreichend sein, die Aufstechhülse nur so weit zu verschieben, dass sie die Folie berührt oder zumindest sehr nahe an der Folie positioniert ist, so dass die Folie erst bei einem Vorwölben beim Aufbringen eines Entleerungsdruckes eröffnet wird.

Nach einer bevorzugten Ausführungsform der Erfindung ist der Behälter durch einen Schlauchbeutel und eine mit diesem verbundene starre Kappe gebildet, an der der Auslassstutzen vorgesehen ist. Dabei bildet der Schlauchbeutel die den Auslassstutzen abdichtende Folie oder Membran. Derartige Schlauchbeutel haben den Vorteil, dass der Behälter, bei welchem es sich häufig um einen Einwegartikel handelt, ein vergleichsweise geringes Gewicht aufweist und Platz sparend zu entsorgen ist.

Alternativ kann der Behälter auch als eine starre Kartusche ausgebildet sein, an deren Stirnseite der Auslassstutzen vorgesehen ist. Hierbei kann der Auslassstutzen beispielsweise etwa in der Ebene der Stirnseite der Kartusche, d.h. etwa am kartuschenseitigen Ende des Auslassstutzens zur Lagerung durch eine Folie oder Membran abgedichtet sein.

Indem die Aufstechhülse als eine in Längsrichtung geschlitzte Hülse aus einem elastischen Material, insbesondere Federstahl, gebildet ist, kann die Aufstechhülse im Wesentlichen verliersicher innerhalb des Auslassstutzens gehalten werden. Die Aufstechhülse wird hierzu unter Vorspannung in den Auslassstutzen eingebracht, so dass die Aufstechhülse dicht an der Innenwand des Auslassstutzens anliegt. Ein ungewolltes Eröffnen des Behälters durch ein Verschieben der Aufstechhülse beispielsweise bei heftigen Erschütterungen während des Transports lässt sich hierdurch vermeiden. Bei der Auswahl eines geeigneten Materials für die Aufstechhülse ist jedoch zu berücksichtigen, dass diese ausreichend steif sein muss, um einen Schlauchbeutel oder dergleichen Folie eröffnen zu können. Alternativ oder zusätzlich zu dem Festklemmen der Aufstechhülse unter Vorspannung in den Auslassstutzen können auch beispielsweise spreizende Federarme und/oder Widerhaken vorgesehen sein, die ein Herausziehen der Aufstechhülse nach dem Prinzip eines Dübels verhindern. Dies ist insbesondere dann wichtig, wenn ohne einen aufgesetzten Mischer, bspw. bei einer Funktionskontrolle, Material ausgetragen werden soll.

In Weiterbildung dieses Erfindungsgedankens ist es vorgesehen, dass die Aufstechhülse Mittel zum insbesondere lösbaren Fixieren der Aufstechhülse in dem Auslassstutzen aufweist. So kann die Aufstechhülse beispielsweise in ihrer Lagerposition und/oder in ihrer Aktivierungsposition in dem Auslassstutzen verrastet werden. Weiter kann auch eine Sicherung, beispielsweise ein Haken oder ein Anschlag, vorgesehen sein, um den Verschiebeweg der Aufstechhülse in dem Auslassstutzen zu begrenzen.

Um ein rasches und sicheres Eröffnen des Behälter zu ermöglichen, wird es bevorzugt, wenn die Aufstechhülse auf ihrer der Folie zugewandten Seite wenigstens eine beispielsweise durch eine Abschrägung ausgebildete Spitze und/oder eine Schneidkante aufweist. Das Eröffnen des Behälters kann dabei dadurch erfolgen, dass die Aufstechhülse in die Folie einschneidet oder einen Bereich der Folie ausschneidet oder dass die Folie geschwächt oder zum Platzen gebracht wird. Beim Ausschneiden eines Bereiches aus der Folie durch die Aufstechhülse wird es bevorzugt, wenn der ausgeschnittene Bereich der Folie noch mit der übrigen Folie verbunden bleibt, damit der Mischer oder dergleichen Ausbringelement nicht durch ein ausgestanztes Folienteil verstopft wird.

Gerade bei der Ausbildung der Aufstechhülse aus Federstahl kann die Aufstechhülse aus einem vergleichsweise dünnen Blechstreifen hergestellt werden. Um sicher zu stellen, dass die Aufstechhülse durch den Mischer oder dergleichen Ausbringelement innerhalb des Auslassstutzens verschoben werden kann, hat es sich als vorteilhaft erwiesen, wenn die Aufstechhülse zumindest auf ihrer der Folie abgewandten Seite wenigstens einen radial nach innen ragenden Vorsprung aufweist. Dieser Vorsprung dient als zusätzliche Anlagefläche für den in den Auslassstutzen einsteckbaren Einlassstutzen des Ausbringelements, durch welchen die Verschiebung der Aufstechhülse bewirkt wird. Bei der Ausbildung der Aufstechhülse als eine geschlitzte Hülse kann beispielsweise wenigstens eine der in axialer Richtung entlang des Schlitzes verlaufenden Kanten der Aufstechhülse nach innen umgekantet sein, um einen derartigen Vorsprung zu bilden. Diese Ausführungsform hat gegenüber einer Umbördelung oder dergleichen den Vorteil, dass das Lumen nur marginal verringert wird.

In einigen Anwendungsfällen ist es wünschenswert, wenn die Spitze der Aufstechhülse an eine definierte Stelle der Folie auftrifft, um diese zu eröffnen. Hierzu können die Aufstechhülse und der Auslassstutzen einander zugeordnete Mittel zur Ausrichtung und/oder Verdrehsicherung der Aufstechhülse in dem Auslassstutzen aufweisen. Dies kann nach einer Ausführungsform der Erfindung dadurch erreicht werden, dass der Auslassstutzen zumindest bereichsweise einen nicht rotationssymmetrischen Querschnitt aufweist und die Aufstechhülse an diese Geometrie angepasst ist. Alternativ oder zusätzlich hierzu kann auf der Innenseite des Auslassstutzens ein Steg oder dergleichen Vorsprung vorgesehen sein, dessen Breite auf die des Schlitzes der Aufstechhülse abgestimmt ist, so dass die Aufstechhülse in dem Auslassstutzen geführt ist.

Die Erfindung betrifft weiter eine Kombination aus wenigstens einem Behälter zur Aufnahme flüssiger und/oder pastöser Substanzen und einem mit diesem verbindbaren Ausbringelement, wobei der Behälter einen durch eine Folie oder Membran verschließbaren rohrförmigen Auslassstutzen aufweist, in dem eine Aufstechhülse verschiebbar aufgenommen ist, und wobei das Ausbringelement wenigstens einen in den jeweiligen Auslassstutzen einsteckbaren Einlassstutzen aufweist. Hierbei soll die Länge des Auslassstutzens, des Einlassstutzens und der Aufstechhülse derart aufeinander abgestimmt sein, dass die Aufstechhülse durch Einstecken des Einlassstutzens des Ausbringelements in den Auslassstutzen in eine Lagerposition, in der die Aufstechhülse nicht aus dem Auslassstutzen herausragt, in eine Aktivierungsposition verschiebbar sein, in der die Aufstechhülse die Folie oder Membran durchdringt und/oder berührt.

Das Ausbringelement kann dabei ein Mischer sein, dessen Einlassstutzen in die Auslassstutzen von zwei Behältern einsteckbar sind. Insbesondere bei der Verwendung dieser erfindungsgemäßen Kombination im Dentalbereich wird es bevorzugt, wenn zwei Behälter zu einer Doppelkartusche zusammengefasst sind. Dies kann beispielsweise dadurch erfolgen, dass kartuschenartige Behälter fest miteinander verbunden sind oder dass ein Verbindungselement vorgesehen ist, um zwei Schlauchbeutelpackungen miteinander zu verbinden. Bei dem Mischer kann es sich sowohl um einen dynamischen, d. h. angetriebenen, Mischer als auch um einen statischen Mischer handeln. Es ist jedoch auch möglich, andere Ausbringelemente, beispielsweise einen Applikator, vorzusehen, der mit einem Einlassstutzen derart auf einen Behälter aufsteckbar ist, dass die Aufstechhülse zur Eröffnung des Behälters verschoben wird.

Bei einem erfindungsgemäßen Verfahren zur Eröffnung eines Behälters ist dessen rohrförmiger Auslassstutzen zunächst durch eine Folie oder Membran verschlossen, wobei in dem Auslassstutzen eine Aufstechhülse verschiebbar aufgenommen ist. Zum Eröffnen des Behälters wird ein Einlassstutzen eines Ausbringelements derart in den Auslassstutzen eingesteckt, dass hierdurch die Aufstechhülse aus einer Lagerposition in eine Aktivierungsposition verschoben wird. In der Lagerposition ragt die Aufstechhülse nicht aus dem Auslassstutzen heraus und steht vorzugsweise auch nicht mit der Folie oder Membran in Kontakt. Dagegen ist die Aufstechhülse in ihrer Aktivierungsposition so weit zu der Folie hin verschoben, dass die Folie zumindest durch Berührung mit der Aufstechhülse geschwächt wird, um bei Aufbringen eines Entleerungsdruckes auf den Behälter aufzuplatzen oder aufzureißen. Vorzugsweise durchsticht oder durchschneidet die Aufstechhülse jedoch die Folie. Es kann jedoch auch ausreichend sein, die Aufstechhülse nur so weit zu verschieben, dass sie zumindest sehr nahe an der Folie positioniert ist, so dass die Folie erst bei einem Vorwölben beim Aufbringen eines Entleerungsdruckes eröffnet wird.

Die Erfindung wird nachfolgend anhand eines Ausführungsbeispiels und unter Bezugnahme auf die Zeichnung näher erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen schematisch:
- Figur 1: in Perspektivansicht zwei Behälter mit separaten Anstechhülsen und einem Mischer,
- Figur 2: einen Schnitt durch zwei Behälter vor dem Aufsetzen des Mischers,
- Figur 3: zwei Behälter mit aufgesetztem Mischer,
- Figur 4: einen Schnitt durch die Behälter nach Figur 3 und
- Figur 5: in vergrößerter Darstellung eine aufgebrochene Kappe mit eingesetzter Aufstechhülse.

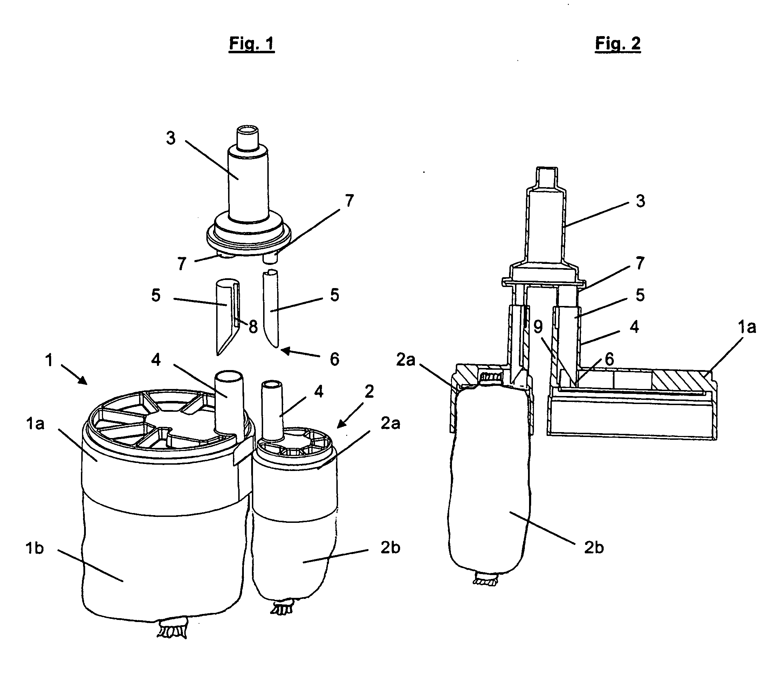

Bei dem in den Figuren 1 bis 4 dargestellten Ausführungsbeispiel sind zwei einander zugeordnete Behälter 1 und 2 vorgesehen, auf die ein gemeinsamer Mischer 3 aufsteckbar ist. Die Behälter sind dabei im Wesentlichen durch starre Kappen 1a, 2a sowie mit diesen verbundene Schlauchbeutel 1b, 2b gebildet. Die aus einem flexiblen Folienmaterial bestehenden Schlauchbeutel 1b, 2b können in die Kappen 1a, 2a beispielsweise eingeklebt oder in anderer geeigneter Weise mit diesen vorzugsweise dichtend verbunden sein.

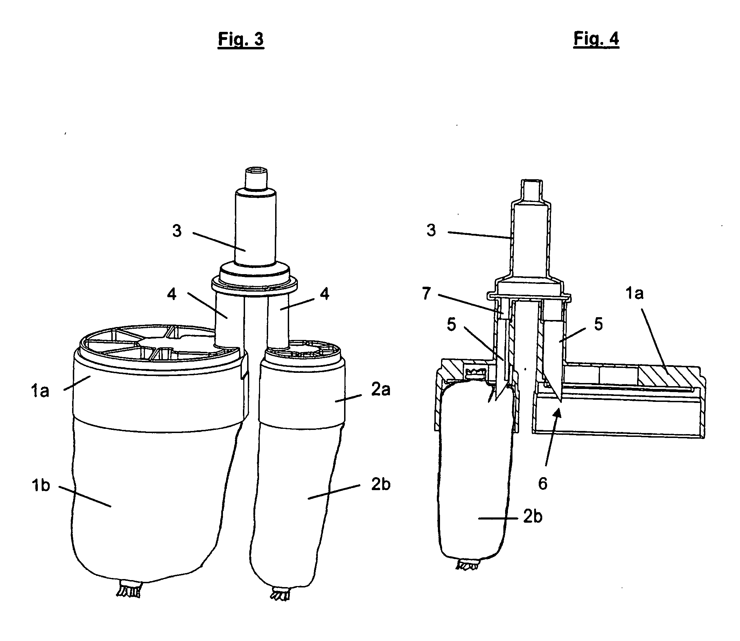

Jede der beiden Kappen 1a, 2a weist einen rohrartigen Auslassstutzen 4 auf, der von der Stirnseite der Kappen vorsteht. Wie aus der Schnittansicht der Figuren 2 und 4 hervor geht, in denen aus Gründen der Übersichtlichkeit jeweils nur ein Schlauchbeutel 2b dargestellt ist, liegen die Schlauchbeutel zumindest bereichsweise an einer stirnseitigen Anschlag- oder Begrenzungswand der Kappen 1a und 2a an. In die Auslassstutzen 4 ist jeweils eine Aufstechhülse 5 einsetzbar. Die Aufstechhülsen 5 können beispielsweise aus Federstahl oder einem anderen ausreichend steifen und elastischen Material bestehen. Auf ihrer den Schlauchbeuteln 1b, 2b zugewandten Seite ist an jeder Aufstechhülse 5 durch eine Abschrägung eine Spitze 6 bzw. eine Schneidkante gebildet, mit welcher das Folienmaterial der Schlauchbeutel durchtrennbar ist.

Der in den Figuren nur schematisch angedeutete Mischer 3 weist zwei Einlassstutzen 7 auf, deren Außendurchmesser an den Innendurchmesser der Auslassstutzen 4 so angepasst ist, dass die Einlassstutzen 7 im Wesentlichen abdichtend in die Auslassstutzen 4 einsteckbar sind.

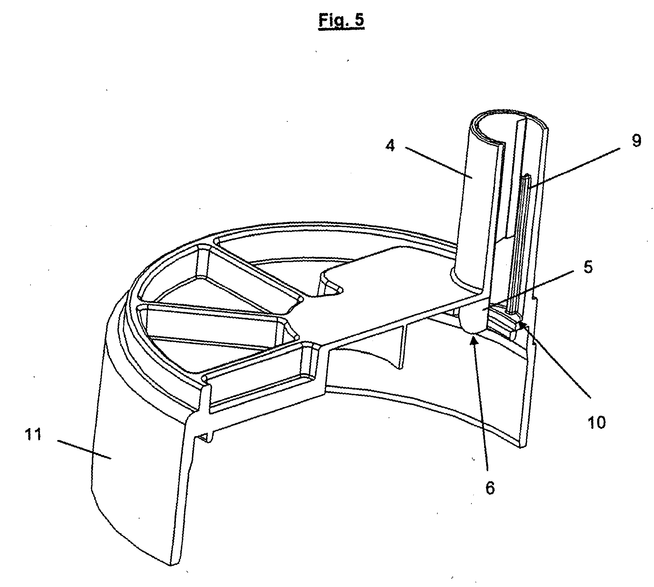

Wie aus der Darstellung der Figuren 2 und 5 ersichtlich ist, ist die Länge der Auslassstutzen 4 und die Länge der Aufstechhülsen 5 derart aneinander angepasst, dass die Aufstechhülsen 5 so in die Auslassstutzen 4 einführbar sind, dass die Aufstechhülsen 5 weder aus dem dem Mischer 3 zugewandten Ende der Auslassstutzen 4 herausragen noch in Richtung zu den Schlauchbeuteln über die stirnseitige Anschlagfläche der Kappen 1a, 2a hinausragen. In dieser in den Figuren 2 und 5 dargestellten Lagerposition kommen die Spitzen 6 der Aufstechhülsen 5 somit nicht mit den Schlauchbeuteln in Kontakt. Da die Aufstechhülsen 5 vollständig in den Auslassstutzen 4 aufgenommen sind, besteht auch nicht die Gefahr, dass die Aufstechhülsen 5 unbeabsichtigt weiter in Richtung zu den Schlauchbeuteln verschoben werden.

Wie in Figur 3 gezeigt, kann der Mischer 3 auf die Behälter 1 und 2 aufgesteckt werden, so dass die Einlassstutzen 7 des Mischers 3 in die Auslassstutzen 4 der Kappen 1a und 2a eindringen. Hierdurch werden die in den Auslassstutzen 4 aufgenommenen Aufstechhülsen 5 in die in Figur 4 gezeigte Aktivierungsposition verschoben, d. h. in Richtung zu den Schlauchbeuteln 1b, 2b. Die Spitzen 6 der Aufstechhülsen 5 durchtrennen dabei das Material der Schlauchbeutel 1b, 2b, so dass in den Behältern 1 bzw. 2 aufgenommene Substanzen durch die Aufstechhülsen 5 und die Auslassstutzen 4 über die Einlassstutzen 7 in den Mischer 3 strömen können. Die Behälter 1 und 2 lassen sich folglich durch das Aufstecken des Mischers 3 und das dadurch bedingte axiale Verschieben der Aufstechhülsen 5 eröffnen.

Die Aufstechhülsen 5 lassen sich besonders einfach aus einem Blechteil biegen und weisen daher einen Längsschlitz 8 auf. Wie in den Figuren 1 und 5 gezeigt, ist eine an den Schlitz 8 angrenzende axiale Längskante der Aufstechhülse 5 nach innen umgekantet. Hierdurch entsteht eine größere Anlagefläche zwischen der Aufstechhülse 5 und der Einlassstutzen 7 des Mischers 3. Die Einlassstutzen 7 des Mischers 3 können daher auch bei der Verwendung besonders dünner Bleche nicht in die Aufstechhülsen 5 eingesteckt werden. Alternativ hierzu kann auch eine Bördelkante an der Aufstechhülse 5 vorgesehen sein, die mit den Einlassstutzen des Mischers in Kontakt tritt.

Gleichzeitig dient der nach innen umgekantete Bereich der Aufstechhülse 5 zusammen mit dem Schlitz 8 der Führung der Aufstechhülse 5 in dem Auslassstutzen 4. Hierzu ist ein in den Auslassstutzen 4 radial nach innen ragender Steg 9 vorgesehen, dessen Breite etwa der Breite des Schlitzes 8 der Aufstechhülsen 5 entspricht. Die Aufstechhülsen 5 werden auf diese Weise verdrehsicher in den Auslassstutzen 4 geführt. Dies ist wichtig, damit die Spitzen 6 an einer Stelle positioniert sind, an der eine optimale Eröffnung ermöglicht wird. So wird es bevorzugt, wenn die Spitzen 6 möglichst nicht mit Falten der Schlauchbeutel 1b, 2b in Kontakt kommen.

Auf der den Schlauchbeuteln zugewandten Seite des Steges 9 ist eine Anschlagfläche 10 ausgebildet, die die Bewegung der Aufstechspaten 5 in Richtung zu den Schlauch beuteln begrenzt. In der entgegengesetzten Bewegungsrichtung werden die Aufstechhülsen 5 durch ihre elastische Vorspannung in den Auslassstutzen 4 gehalten, so dass die Aufstechhülsen 5 nicht während des Transports aus den Auslassstutzen 4 herausfallen können.

Alternativ zu der in den Figuren 1 bis 5 dargestellten Ausführungsform der Behälter können erfindungsgemäß auch im Wesentlichen starre, kartuschenartige Behälter vorgesehen sein. Hierzu kann beispielsweise die in Figur 5 nach unten ragende zylindrische Wand 11 der Kappen entsprechend verlängert werden. Die zu lagernden Substanzen können dann unmittelbar in den so gebildeten Behälter eingefüllt werden. Zum Verschließen der Auslassstutzen 4 kann eine Folie oder Membran beispielsweise in der Ebene der stirnseitigen Anschlagfläche der Kappen vorgesehen sein, welche ein Auslaufen der Substanzen verhindert. Diese Folie oder Membran kann dann wie oben beschrieben durch das Aufstecken eines Mischers und das dadurch bedingte Verschieben der Aufstechhülsen 5 durchtrennt werden.

Nach einer alternativen in den Figuren nicht gezeigten und nicht erfindungsgemäßen Ausführungsform kann die Dornhülse in ihrer Lagerposition nach außen aus dem Stutzen hervorstehen. Die Einlassstutzen des Mischers dringen dabei nicht in die Auslassstutzen ein, sondern umgreifen diese bei der Verbindung des Mischers mit den Behältern. Die Einlassstutzen des Mischers sind mit einem inneren Vorsprung, einem Absatz oder einer anderen geeigneten Anschlagfläche versehen, welche mit der jeweiligen Dornhülse in Kontakt tritt, wenn der Mischer auf die Behälter aufgesetzt wird. Hierdurch wird Dornhülse aktiviert, d.h. in Richtung zu der Folie verschoben, so dass diese entweder unmittelbar oder durch Aufbringen eines Entleerungsdrucks eröffnet wird.

Weiter ist es auch möglich, eine Kombination der beiden oben beschriebenen Ausführungsformen bei zwei mit einem Mischer verbindbaren Behältern vorzusehen, so dass ein Einlassstutzen des Mischers in einen Auslassstutzen eindringt, während der andere Einlassstutzen des Mischers einen Auslassstutzen umgreift.

### Bezugszeichenliste:

- 1 , 2: Behälter
- 1a, 2a: Kappe
- 1b, 2b: Schlauchbeutel
- 3: Mischer
- 4: Auslassstutzen
- 5: Aufstechhülse
- 6: Spitze/Schneidkante
- 7: Einlassstutzen
- 8: Schlitz
- 9: Steg
- 10: Anschlagfläche
- 11: zylindrische Wand

## Patentansprüche

1. Behälter zur Aufnahme flüssiger und/oder pastöser Substanzen mit einem rohrförmigen Auslassstutzen (4), der zur Lagerung durch eine Folie (1b, 2b) oder Membran gegenüber einer in dem Behälter aufnahmbaren Substanz abgedichtet ist und der zur Aufnahme eines bereichsweise in den Auslassstutzen (4) einsteckbaren Einlassstutzens (7) eines Ausbringelements (3) ausgebildet ist, **gekennzeichnet durch** eine Aufstechhülse (5), die als eine in Längsrichtung geschlitzte Hülse aus einem elastischen Material gebildet ist und die verschiebbar in dem Auslassstutzen (4) aufgenommen ist, wobei die Länge des Auslassstutzens (4) und der Aufstechhülse (5) derart aufeinander abgestimmt sind, dass die **durch** Einstecken des Einlassstutzens (7) des Ausbringelements (3) in den Auslassstutzen (4) verschiebbare Aufstechhülse (5) aus einer Lagerposition, in der die Aufstechhülse (5) nicht aus dem Auslassstutzen (4) herausragt, in eine Aktivierungsposition verschiebbar ist, in der die Aufstechhülse (5) die Folie (1b, 2b) berührt und/oder durchdringt, wobei die Aufstechhülse (5) **durch** elastische Vorspannung in dem Auslassstutzen (4) so gehalten ist, dass die Aufstechhülse (5) in der Lagerposition, in der die Aufstechhülse (5) nicht mit der Folie (1b, 2b) oder Membran in Kontakt tritt, nicht während des Transports aus dem Auslassstutzen (4) herausfallen kann.

2. Behälter nach Anspruch 1, der durch einen Schlauchbeutel (1 b, 2b) und eine mit diesem verbundene starre Kappe (1a, 2a) gebildet ist, an der der Auslassstutzen (4) vorgesehen ist, wobei der Schlauchbeutel (1b, 2b) die den Auslassstutzen (4) abdichtende Folie (1b, 2b) oder Membran bildet.

3. Behälter nach Anspruch 1, der als eine starre Kartusche ausgebildet ist, an deren Stirnseite der Auslassstutzen (4) vorgesehen ist, wobei der Auslassstutzen (4) zur Lagerung durch eine Folie (1b, 2b) oder Membran etwa am kartuschenseitigen Ende des Auslassstutzens (4) abgedichtet ist.

4. Behälter nach einem der vorhergehenden Ansprüche, **dadurch gekennzeichnet, dass** die Aufstechhülse (5) aus Federstahl gebildet ist.

5. Behälter nach einem der vorhergehenden Ansprüche, **dadurch gekennzeichnet, dass** die Aufstechhülse (5) Mittel (10) zum insbesondere lösbaren Fixieren und/oder zur Begrenzung des Verschiebeweges der Aufstechhülse (5) in dem Auslassstutzen (4) aufweist.

6. Behälter nach einem der vorhergehenden Ansprüche, **dadurch gekennzeichnet, dass** die Aufstechhülse (5) auf ihrer der Folie (1b, 2b) oder Membran zugewandten Seite wenigstens eine bspw. durch eine Abschrägung ausgebildete Spitze (6) und/oder eine Schneidkante aufweist.

7. Behälter nach einem der vorhergehenden Ansprüche, **dadurch gekennzeichnet, dass** die Aufstechhülse (5) zumindest auf ihrer der Folie (1b, 2b) oder Membran abgewandten Seite wenigstens einen radial nach innen ragenden Vorsprung aufweist.

8. Behälter nach einem der vorhergehenden Ansprüche, **dadurch gekennzeichnet, dass** die Aufstechhülse (5) und der Auslassstutzen (4) einander zugeordnete Mittel (8, 9) zur Ausrichtung und/oder Verdrehsicherung der Aufstechhülse (5) in dem Auslassstutzen (4) aufweisen.

9. Kombination aus wenigstens einem Behälter (1, 2) zur Aufnahme flüssiger und/oder pastöser Substanzen und einem mit diesem verbindbaren Ausbringelement (3), wobei der Behälter einen durch eine Folie (1b, 2b) oder Membran verschließbaren rohrförmigen Auslassstutzen (4) aufweist, in dem eine Aufstechhülse (5) verschiebbar aufgenommen ist, und wobei das Ausbringelement (3) wenigstens einen in den jeweiligen Auslassstutzen (4) einsteckbaren Einlassstutzen (7) aufweist, **dadurch gekennzeichnet, dass** die Länge des Auslassstutzens (4), des Einlassstutzens (7) und der Aufstechhülse (5) derart aufeinander abgestimmt sind, dass die Aufstechhülse (5) durch Einstecken des Einlassstutzens (7) des Ausbringelements (3) in den Auslassstutzen (4) aus einer Lagerposition, in der die Aufstechhülse (5) nicht aus dem Auslassstutzen (4) herausragt, in eine Aktivierungsposition verschiebbar ist, in der die Aufstechhülse (5) die Folie (1b, 2b) oder Membran berührt und/oder durchdringt.

10. Kombination nach Anspruch 9 mit einem Behälter (1, 2) nach einem der Ansprüche 1 - 8.

11. Kombination nach Anspruch 9 oder 10, **dadurch gekennzeichnet, dass** das Ausbringelement (3) ein Mischer (3) ist, dessen Einlassstutzen (7) in die Auslassstutzen (4) von insbesondere zwei Behältern (1, 2) einsteckbar sind.

12. Verfahren zur Eröffnung eines Behälters, insbesondere nach einem der Ansprüche 1 bis 8, wobei der Behälter (1, 2) einen zunächst durch eine Folie (1b, 2b) oder Membran verschlossenen rohrförmigen Auslassstutzen (4) aufweist, in dem eine Aufstechhülse (5) verschiebbar aufgenommen ist, und wobei zum Eröffnen des Behälters (1, 2) ein Einlassstutzen (7) eines Ausbringelements (3) in den Auslassstutzen (4) derart eingesteckt wird, dass die Aufstechhülse (5) aus einer Lagerposition, in der diese nicht aus dem Auslassstutzen (4) herausragt, in eine Aktivierungsposition verschoben wird, in der die Aufstechhülse (5) die Folie (1b, 2b) oder Membran berührt und/oder durchdringt.

13. Verfahren zur Eröffnung eines Behälters nach Anspruch 12, **dadurch gekennzeichnet, dass** die Aufstechhülse (5) aus elastischem Federstahl gebildet ist.

14. Verfahren zur Eröffnung eines Behälters nach einem der Ansprüche 12 oder 13, **dadurch gekennzeichnet, dass** die Aufstechhülse (5) geschlitzt und/oder mit Bördelkante versehen ist.

15. Verfahren zur Eröffnung eines Behälters nach einem der Ansprüche 12 bis 14, **dadurch gekennzeichnet, dass** die Aufstechhülse (5) durch eine Verdrehsicherung in dem Auslassstutzen (4) gesichert ist.

## Claims

1. A container for accepting liquid or paste-like substances having a tubular outlet connection (4) that for storing purposes is sealed with respect to a substance that can be accepted into the container by a foil (1b, 2b) or membrane and that furthermore is configured to accept inlet connections (7) of a dispenser (3) that can be partially inserted into the outlet connection (4) **characterised by** a puncturing bushing (5), which is a bushing formed with a slit in the longitudinal direction and composed of an elastic material and which furthermore is received in the outlet connection (4) in a slidably displaceable manner, wherein the lengths of the outlet connection (4) and of the puncturing bushing (5) are aligned with one another in such a manner that, upon inserting the inlet connections (7) of the dispenser (3) into the outlet connection (4), the slidably displaceable puncturing bushing (5) is displaceable from a storage position, in which the puncturing bushing (5) does not protrude from the outlet connection (4), into an activation position, in which position the puncturing bushing (5) contacts and/or penetrates the foil (1b, 2b), wherein the puncturing bushing (5) is held by elastic pre-tensioning in the outlet connection (4) in such a manner that the puncturing bushing (5) in the storage position, in which the puncturing bushing (5) does not come into contact with the foil (1b, 2b) or membrane, cannot fall out of the outlet connection (4) during transport.

2. The container as specified in claim 1, which container is formed by a tubular bag (1b, 2b) and a rigid cap (1a, 2a) connected thereto on which the outlet connection (4) is provided, wherein the tubular bag (1b, 2b) forms the foil (1b, 2b) or membrane that seals the outlet connection (4).

3. The container as specified in claim 1, which container is configured as a rigid cartridge on the front face of which the outlet connection (4) being provided, wherein the outlet connection (4) is sealded for storage purposes by a foil (1b, 2b) or membrane approximately on the cartridge-side end of the outlet connection (4).

4. The container as specified in any one of the preceding claims, **characterised in that** the puncturing bushing (5) is composed of stainless steel.

5. The container as specified in any one of the preceding claims, **characterised in that** the puncturing bushing (5) exhibits means (10) for the, in particular detachable, attaching and/or for limiting the displacement path of the puncturing bushing (5) in the outlet connection (4).

6. The container as specified in any one of the preceding claims, **characterised in that** the puncturing bushing (5) exhibits on its side facing towards the foil (1b, 2b) or membrane at least one point (6) formed, for example, by a taper and/or exhibits a cutting edge.

7. The container as specified in any one of the preceding claims, **characterised in that** the puncturing bushing (5) exhibits on at least its side facing away from the foil (1b, 2b) or membrane at least one protrusion that protrudes radially inward.

8. The container as specified in any one of the preceding claims, **characterised in that** the puncturing bushing (5) and the outlet connection (4) have means (8, 9) associated with one another for directing and/or rotationally fixing the puncturing bushing (5) in the outlet connection (4).

9. A combination of at least one container (1, 2) for accepting liquid or paste-like substances and a dispenser (3) that can be connected thereto, wherein the container has a tubular outlet connection (4), in which a puncturing bushing is held in a displaceable manner, sealable by a foil (1b, 2b) or membrane, and wherein the dispenser (3) has at least one inlet connection (7) that can be inserted into the respective outlet connection (4), **characterised in that** the lengths of the outlet connection (4), the inlet connection (7), and the puncturing bushing (5) are aligned with one another in such a manner that, upon inserting the inlet connections (7) of the dispenser (3) into the outlet connection (4), puncturing bushing (5) is displaceable from a storage position, in which the puncturing bushing (5) does not protrude from the outlet connection (4), into an activation position, in which position the slip-on bushing (5) contacts and/or penetrates the foil (1b, 2b).

10. The combination as specified in claim 9, with a container (1, 2) as specified in any one of claims 1-8.

11. The combination as specified in claim 9 or claim 10, **characterised in that** the dispenser (3) is a mixer (3) the inlet connections (7) of which are insertable into the outlet connections (4) of, in particular two, containers (1, 2).

12. A method for opening a container, in particular as specified in any one of the claims 1 to 8, wherein the container (1, 2) exhibits a tubular outlet connection (4) initially sealed by a foil (1b, 2b) or membrane in which connection a puncturing bushing (5) is displaceably received, and wherein in order to open the container (1, 2), an inlet connection (7) of a dispenser (3) is inserted into the outlet connection (4) in such a manner that the puncturing bushing (5) is displaced out of a storage position, in which it does not protrude out of the outlet connection (4), into an activation position in which the puncturing bushing (5) contacts and/or penetrates the foil (1b, 2b) or membrane.

13. The method for opening a container as specified in claim 12, **characterised by** the fact that the puncturing bushing (5) is composed of a resilient spring steel.

14. The method for opening a container as specified in claim 12 or claim 13, **characterised in that** the puncturing bushing (5) is slotted and/or provided with a flanged edge.

15. The method for opening a container as specified in any one of the claims 12 to 14, **characterised in that** the puncturing bushing (5) is secured by an anti-twist lock in the outlet connection (4).

## Revendications

1. Récipient destiné à recevoir des substances liquides ou pâteuses, avec un bec verseur (4) tubulaire, qui pour le stockage est rendu étanche par une pellicule (1b, 2b) ou membrane par rapport à une substance susceptible d'être réceptionnée dans le récipient et qui est conçu pour recevoir un manchon d'introduction (7) d'un élément d'évacuation (3) susceptible d'être inséré en partie dans le bec verseur (4), **caractérisé par** un poinçon de perçage (5) qui est conçu sous la forme d'un poinçon fendu en direction longitudinale en une matière élastique et qui est réceptionné en étant déplaçable dans le bec verseur (4), la longueur du bec verseur (4) et celle du poinçon de perçage (5) étant adaptées l'une à l'autre de sorte que le poinçon de perçage (5) déplaçable par insertion du manchon d'introduction (7) de l'élément d'évacuation (3) dans le bec verseur (4) soit déplaçable d'une position de stockage dans laquelle le poinçon de perçage (5) ne saillit pas hors du bec verseur (4) dans une position d'activation dans laquelle le poinçon de perçage (5) est en contact avec la pellicule (1b, 2b) et/ou la perce, le poinçon de perçage (5) étant maintenu par précontrainte élastique dans le bec verseur (4) de sorte que, dans la position de stockage, dans laquelle le poinçon de perçage (5) n'entre pas en contact avec la pellicule (1b, 2b) ou membrane, le poinçon de perçage (5) ne puisse pas tomber hors du bec verseur (4) pendant le transport.

2. Récipient selon la revendication 1, qui est formé par un sachet tubulaire (1b, 2b) et par un capuchon rigide (1a, 2a) relié à ce dernier, sur lequel est prévu le bec verseur (4), le sachet tubulaire (1b, 2b) formant la pellicule (1b, 2b) ou membrane assurant l'étanchéité du bec verseur (4).

3. Récipient selon la revendication 1, qui est conçu comme une cartouche rigide, sur la face frontale de laquelle est prévu le bec verseur (4), le bec verseur (4) étant rendu étanche pour le stockage par une pellicule (1b, 2b) ou membrane, par exemple sur l'extrémité côté cartouche du bec verseur (4).

4. Récipient selon l'une quelconque des revendications précédentes, **caractérisé en ce que** le poinçon de perçage (5) est conçu en acier à ressorts.

5. Récipient selon l'une quelconque des revendications précédentes, **caractérisé en ce que** le poinçon de perçage (5) comporte des moyens pour la fixation notamment amovible et/ou pour la limitation de la course de déplacement du poinçon de perçage (5) dans le bec verseur (4).

6. Récipient selon l'une quelconque des revendications précédentes, **caractérisé en ce que** le poinçon de perçage (5) comporte sur son côté dirigé vers la pellicule (1b, 2b) ou membrane au moins une pointe (6) formée par un chanfrein et/ou par une arête coupante.

7. Récipient selon l'une quelconque des revendications précédentes, **caractérisé en ce que** le poinçon de perçage (5) comporte au moins sur son côté opposé à la pellicule (1b, 2b) au moins une saillie pénétrant vers l'intérieur en direction radiale.

8. Récipient selon l'une quelconque des revendications précédentes, **caractérisé en ce que** le poinçon de perçage (5) et le bec verseur (4) comportent des moyens (8, 9) mutuellement associés pour l'alignement ou pour le blocage contre la rotation du poinçon de perçage (5) dans le bec verseur (4).

9. Association d'au moins un récipient (1, 2) destiné à recevoir des substances liquides et/ou pâteuses et d'un élément d'évacuation (3) susceptible d'être assemblé sur ce dernier, le récipient comportant un bec verseur (4) tubulaire susceptible d'être fermé par une pellicule (1b, 2b) ou membrane, dans lequel un poinçon de perçage (5) est réceptionné en étant déplaçable et l'élément d'évacuation (3) comportant au moins un manchon d'introduction (7) insérable dans le bec verseur (4) concerné, **caractérisée en ce que** la longueur du bec verseur (4), celle du manchon d'introduction (7) et celle du poinçon de perçage (5) sont adaptées les unes aux autres de sorte que par insertion du manchon d'introduction (7) de l'élément d'évacuation (3) dans le bec verseur (4), le poinçon de perçage (5) soit déplaçable d'une position de stockage dans laquelle le poinçon de perçage (5) ne saillit pas hors du bec verseur (4) dans une position d'activation dans laquelle le bec verseur (4) est en contact avec la pellicule (1b, 2b) ou membrane et/ou la perce.

10. Association selon la revendication 9 avec un récipient (1, 2) selon l'une quelconque des revendications 1 à 8.

11. Association selon les revendications 9 ou 10, **caractérisée en ce que** l'élément d'évacuation (3) est un agitateur (3) dont les manchons d'introduction (7) sont insérables dans les becs verseurs (4) de notamment deux récipients (1, 2).

12. Procédé d'ouverture d'un récipient, notamment selon l'une quelconque des revendications 1 à 8, le récipient comportant un bec verseur (4) tubulaire fermé d'abord par une pellicule (1, 2) ou membrane, dans lequel un poinçon de perçage (5) est réceptionné en étant déplaçable et pour ouvrir le récipient (1, 2) on insère un manchon d'introduction (7) d'un élément d'évacuation (3) dans le bec verseur (4) de sorte que le poinçon de perçage (5) soit déplacé d'une position de stockage dans laquelle ce dernier ne saillit pas hors du bec verseur (4) dans une position d'activation, dans laquelle le poinçon de perçage est en contact avec la pellicule (1b, 2b) ou membrane et/ou la perce.

13. Procédé d'ouverture d'un récipient selon la revendication 12, **caractérisé en ce que** le poinçon de perçage (5) est conçu en acier à ressorts.

14. Procédé d'ouverture d'un récipient selon l'une quelconque des revendications 12 ou 13, **caractérisé en ce que** le poinçon de perçage (5) est fendu ou muni d'une arête de bordage.

15. Procédé d'ouverture d'un récipient selon l'une quelconque des revendications 12 à 14, **caractérisé en ce que** le poinçon de perçage (5) est bloqué dans le bec verseur (4) par une sécurité anti-rotation.
